# EUROPÄISCHE PATENTANMELDUNG

(11) **EP 3 518 023 A1**
(43) Veröffentlichungstag der Anmeldung: **31.07.2019**
(21) Anmeldenummer: 18153749.9
(22) Anmeldetag: 26.01.2018
(51) Int. Cl.: G02B 27/01, G02B 19/00

(54) **VISUALISIERUNGSVORRICHTUNG**

(71) Anmelder: Momes GmbH, 69120 Heidelberg (DE)
(72) Erfinder: Ferlemann, Frieder, D-69126 Heidelberg (DE); Asfour, Jean-Michel, D-69469 Weinheim (DE); Sandrock, Dirk, D-69259 Wilhelmsfeld (DE)
(74) Vertreter: Koelle, Alexander

(57) **Zusammenfassung**

Die Erfindung offenbart eine Visualisierungsvorrichtung (100), aufweisend
- einen Lichtsammelbereich (104), der aus der Umgebung der Visualisierungsvorrichtung (100) auftreffendes Licht sammelt;
- einen Kollimationsbereich (106), der mit dem Lichtsammelbereich (104) einstückig ausgebildet ist, der das vom Lichtsammelbereich (104) gesammelte Licht kollimiert und
- eine Anzeigeeinrichtung (110), wobei der Kollimationsbereich (106) das kollimierte Licht in Richtung Anzeigeeinrichtung (110) strahlt;
dadurch gekennzeichnet, dass der Lichtsammelbereich (104) an seiner dem Kollimationsbereich (106) zugewandten Seite eine erste Dicke und eine erste Breite und der Kollimationsbereich (106) an seiner dem Lichtsammelbereich (104) zugewandten Seite eine zweite Dicke und eine zweite Breite aufweist und an seinem dem Lichtsammelbereich (104) abgewandten Seite eine dritte Dicke und eine dritte Breite aufweist, wobei die dritte Dicke größer als die zweite Dicke ist.

Die Erfindung betrifft auch eine Anordnung mit einer Kopfbedeckung (202) oder einem Kopfschutz (202) und der Visualisierungsvorrichtung (100).

## Beschreibung

Die Erfindung betrifft eine am Kopf tragbare Visualisierungsvorrichtung, die einem Nutzer Informationen anzeigt, ohne das durch den Nutzer wahrnehmbare Gesichtsfeld wesentlich einzuschränken.

Im Stand der Technik sind am Kopf getragene Anzeigeeinrichtungen, beispielsweise Datenbrillen bekannt, die aber das Gesichtsfeld des Nutzers zu stark einschränken und/oder mit zu hohen Intensitätsverlusten bei der Weiterleitung des (ein-) gesammelten Lichtes verbunden sind.

So sind beispielsweise aus US 2006/0119539 A1, US 6,181,304 B1, JP 04341078, US 5,546,099 und EP 0 825 470 A1 Datenbrillen bekannt. Diese schränken jedoch das Geschichtsfeld zu stark ein.

Die WO 2011/095544 A1 offenbart eine Kappe, die Informationen in das Gesichtsfeld eines Nutzers einblenden kann. Die Kappe weist eine transparente Folie auf, die aus der Umgebung absorbiertes Licht zu einer LCD-Anzeigeeinrichtung leitet. Nachteil dieser Kappe ist aber, dass die Anzeigeeinrichtung nicht in allen Fällen, insbesondere bei einem schnellen Lichtwechsel des Umgebungslichts, beispielsweise bei einer Einfahrt in einen Tunnel, zufriedenstellend ausgeleuchtet ist.

Die US 4,997,263 offenbart eine Visualisierungsvorrichtung, bei der Umgebungslicht in das Beleuchtungssystem mittels mehrerer Linsensysteme und mehrerer Spiegel als Durchlichtbeleuchtung einer LCD-Anzeigeeinrichtung eingekoppelt wird. Ein derartiges System ist aufwändig herzustellen und die vielen Komponenten bewirken einen Intensitätsverlust.

Ein Problem von Visualisierungsvorrichtungen des Standes der Technik ist, dass die Intensität des aus der Umgebung absorbierten Lichts in einigen Fällen nicht für die Durchlichtbeleuchtung einer LCD-Anzeigeeinrichtung ausreicht. Ein Problem bei anderen Visualisierungsvorrichtungen des Standes der Technik unter Verwendung aktiver Lichtquellen ist der hohe Stromverbrauch, der zu einer kurzen Batterielaufzeit führt.

Ausgehend von diesem Stand der Technik stellt sich die Erfindung zur Aufgabe, eine Visualisierungsvorrichtung zu schaffen, die eine auf Umgebungslicht basierende Durchlichtbeleuchtung mit höherer Intensität bereitstellt, ohne das durch den Nutzer wahrnehmbare Gesichtsfeld wesentlich einzuschränken.

Die Aufgabe der Erfindung wird durch eine Visualisierungsvorrichtung nach Anspruch 1 und durch eine Anordnung nach Anspruch 14 gelöst. Die abhängigen Ansprüche betreffen bevorzugte Ausführungsformen.

Eine erfindungsgemäße Visualisierungsvorrichtung umfasst einen Lichtsammelbereich, einen Kollimationsbereich und eine Anzeigeeinrichtung. Der Lichtsammelbereich sammelt aus der Umgebung der Visualisierungsvorrichtung auftreffendes Licht. Licht aus der Umgebung tritt quer oder ungerichtet zur optischen Achse des Lichtsammelbereichs in den Lichtsammelbereich ein. Daher ist die Breite des Lichtsammelbereichs ein Vielfaches höher als die Dicke des Lichtsammelbereichs. Die Lichteintrittsfläche des Lichtsammelbereichs erstreckt sich längs und quer zur optischen Achse des Lichtsammelbereichs. Der Kollimationsbereich ist einstückig (integral) mit dem Lichtsammelbereich ausgebildet und kollimiert das vom Lichtsammelbereich gesammelte Licht. Es ist aber auch möglich, den Lichtsammelbereich mit angespritzter Kollimationslinse auszugestalten. Der Kollimationsbereich strahlt das kollimierte Licht in Richtung Anzeigeeinrichtung. Der Lichtsammelbereich weist an seiner dem Kollimationsbereich zugewandten Seite eine erste Dicke und eine erste Breite auf. Der Kollimationsbereich weist an seiner dem Lichtsammelbereich zugewandten Seite eine zweite Dicke und zweite Breite auf und an seinem dem Lichtsammelbereich abgewandten Seite eine dritte Dicke und eine dritte Breite auf, wobei die dritte Dicke größer als die zweite Dicke ist. Die Dicke des Lichtsammelbereiches kann konstant sein.

Der Lichtsammelbereich sammelt das Licht aus der Umgebung und leitet dieses wie ein Wellenleiter zum Kollimationsbereich. Die Dicke des Lichtsammelbereiches kann konstant sein. Der Kollimationsbereich parallelisiert das Licht und gibt es an die Anzeigeeinrichtung ab. Dadurch entsteht eine homogene Ausleuchtung der Anzeigeeinrichtung mit hoher Intensität. Die Anzeigeeinrichtung kann eine Durchlicht-Anzeigeeinrichtung sein, beispielsweise eine LCD-Anzeigeeinrichtung. Bei einer Durchlicht-Anzeigeeinrichtung wird der Hintergrund der Anzeigeeinrichtung beleuchtet. Dabei kann die darzustellende Information die Hintergrundbeleuchtung abschatten (Hellfeld). Es ist aber auch möglich, dass, die darzustellende Information die Hintergrundbeleuchtung nicht abschattet, weil sie transparent dargestellt wird (Dunkelfeld).

Der Lichtsammelbereich und der Kollimationsbereich können einstückig als Spritzgussbauteil hergestellt sein. Zum einen ist eine derartige Herstellung kostengünstig und zum anderen führt sie zu besonders geringen Transmissionsverlusten.

Bei einer Ausführungsform können die erste Dicke und die zweite Dicke gleich groß sein. Bei wieder einer anderen Ausführungsform kann die Dicke des Kollimationsbereichs linear von der zweiten Dicke zur dritten Dicke zunehmen. Bei einer weiteren Ausführungsform kann die Dicke von der ersten oder zweiten Dicke zur dritten Dicke nicht-linear zunehmen, beispielsweise exponentiell, polynomial, trompetenförmig.

Die Dicke des Lichtsammelbereichs kann konstant sein. Dadurch wirkt der Lichtsammelbereich besonders vorteilhaft als Lichtwellenleiter.

Bei einer Ausführungsform kann die Dicke des Lichtsammelbereichs im Längsschnitt konstant sein. Im Längsschnitt des Lichtsammelbereiches und des Kollimationsbereiches kann eine Kante des Lichtsammelbereiches und des Kollimationsbereiches kollinear sein. Im Längsschnitt kann eine Kante des Kollimationsbereiches gegenüber dem Lichtsammelbereich abgewinkelt sein.

Bei einer Ausführungsform kann die Dicke des Lichtsammelbereichs im Längsschnitt konstant sein. Im Längsschnitt können beide Kanten des Kollimationsbereichs gegenüber dem Lichtsammelbereich abgewinkelt sein.

Bei dieser Ausführungsform wirkt der Kollimationsbereich so, dass er das von dem Lichtsammelbereich gesammelte und weitergeleitete Licht kollimiert, d. h. parallelisiert.

Bei einer Ausführungsform kann der Lichtsammelbereich ein fluoreszierendes Material aufweisen. Dadurch kann der Lichtsammelbereich besonders viel Licht aus der Umgebung absorbieren. Es versteht sich, dass auch der Kollimationsbereich ein fluoreszierendes Material aufweisen kann, insbesondere wenn der Lichtsammelbereich und der Kollimationsbereich einstückig (integral) ausgebildet sind. Der Lichtsammelbereich und/oder der Kollimationsbereich und/oder das fluoreszierende Material können eine transparente leuchtgelbe (neon-gelbe) oder leuchtorange-rote Farbe aufweisen. Der Lichtsammelbereich und der Kollimationsbereich können mittels Spritzguss als transparentes Polycarbonatbauteil hergestellt sein. Das fluoreszierende Material weist polymerlösliche Farbstoffe auf. Besonders geeignet ist neon-gelbe Farbe als fluoreszierendes Material zu verwenden. Zum Erreichen einer optimalen Farbstoffkonzentration wird der Farbstoff in Granulatform als Masterbatch hinzugefügt. Besonders vorteilhaft ist ein Volumenanteil des fluoreszierenden Materials von 2,5 %. Hierbei wird eine sehr gute Intensität der Ausleuchtung der Anzeigeeinrichtung erreicht. Ein Anteil von 1,5 % wäre auch möglich, jedoch nimmt dann die Intensität ab. Bei höheren Konzentrationen des fluoreszierenden Materials über 2,5 % nimmt die Sprödigkeit und/oder Brüchigkeit des Polycarbonatbauteils zu.

Das fluoreszierende Material wandelt auftreffendes Licht in Licht längerer Wellenlänge. Ein großer Anteil des Lichtes wird anschließend vom Lichtsammelbereich und Kollimationsbereich in Richtung Anzeigeeinrichtung geleitet. Der Anteil liegt im Bereich bis zu 25 % des Fluoreszenzlichtes

Der Lichtsammelbereich sammelt aus der Umgebung der Visualisierungsvorrichtung auftreffendes Licht, indem kurzwellige Anteile des Umgebungslichtes durch einen Fluoreszenzfarbstoff absorbiert werden. Die Fluoreszenzemission ist dann unabhängig von dem Lichteinfall. Dadurch wird erreicht, dass ein großer Teil der Fluoreszenzemission im Lichtwellenleiter gefangen bleibt. Der Anteil des gefangenen Lichtes erhöht sich bei höherem optischen Brechungsindex des Lichtwellenleiters.

Die Anteile der dem Lichtwellenleiter wieder auskoppelnden Fluoreszenzemission geschieht zu gleichen Anteilen aus jeder der sechs Flächen des Lichtwellenleiters. Dadurch weist das an den Kanten des Lichtwellenleiters emittierte Licht eine um das Verhältnis von Breite zu Dicke des Lichtwellenleiters erhöhte Lichtmenge pro Fläche auf.

Bei einer Ausführungsform kann die Visualisierungsvorrichtung einen Umlenkbereich aufweisen, der am Kollimationsbereich angeordnet ist. Der Umlenkbereich weist an seiner dem Kollimationsbereich abgewandten Seite eine Reflexionsfläche auf, die gegenüber der Längsachse und/oder der optischen Achse des Lichtsammelbereichs und/oder des Kollimationsbereichs geneigt ist. Sowohl der Lichtsammelbereich als auch der Kollimationsbereich können flexibel ausgebildet sein. Folglich können der Lichtsammelbereich und der Kollimationsbereich gekrümmt sein. In diesem Fall ist dann die optische Achse so gekrümmt, wie der Lichtsammelbereich und der Kollimationsbereich gekrümmt sind. Auch in diesem Fall ist die Reflexionsfläche des Umlenkbereichs gegenüber der optischen Achse geneigt. Durch diese Ausführungsform wird ermöglicht, dass der Lichtsammelbereich und der Kollimationsbereich aus Sicht eines Anwenders hinter der Anzeigeeinrichtung, d. h. weiter vom Auge eines Nutzers entfernt, angeordnet sein kann. Dadurch wird die Dicke der Visualisierungsvorrichtung reduziert.

Der Lichtsammelbereich, der Kollimationsbereich und der Umlenkbereich können einstückig als Spritzgussbauteil hergestellt sein. Zum einen ist eine derartige Herstellung kostengünstig und zum anderen wird eine hohe Intensität erreicht. Der Lichtsammelbereich, der Kollimationsbereich und der Umlenkbereich können mittels Spritzguss als transparentes Polycarbonatbauteil hergestellt sein. Auch der Umlenkbereich kann das zuvor beschriebene fluoreszierende Material aufweisen.

Der Kollimationsbereich kann aber auch an den Lichtsammelbereich angespritzt sein.

Bei einer Ausführungsform kann die optische Achse der Anzeigeeinrichtung gegenüber der optischen Achse des Lichtsammelbereichs und/oder des Kollimationsbereichs geneigt sein, beispielsweise um 70° bis 95°, bevorzugt von 80° bis 90°. Bei einer Ausführungsform kann die optische Achse der Anzeigeeinrichtung gegenüber der optischen Achse des Lichtsammelbereichs und/oder des Kollimationsbereichs senkrecht stehen. Auch durch diese Maßnahme wird erreicht, dass sich der Lichtsammelbereich und der Kollimationsbereich hinter der Anzeigeeinrichtung befinden, d. h., der Lichtsammelbereich und/oder der Kollimationsbereich sind weiter vom Auge des Nutzers entfernt als die Anzeigeeinrichtung.

Die Visualisierungsvorrichtung kann eine Halterung aufweisen, die zumindest den Lichtsammelbereich stützt und zumindest in einem Bereich, der dem Lichtsammelbereich benachbart ist, transluzent ausgebildet ist. Bei dieser Ausführungsform kann die Halterung Licht aus mehreren Raumrichtungen in Richtung Lichtsammelbereich streuen oder durchlassen, so dass die Intensität des an die Anzeigeeinrichtung abgegebenen Lichtes erhöht wird. Es versteht sich, dass die Halterung auch den Kollimationsbereich und/oder den Umlenkbereich stützen kann und auch Licht in den Kollimationsbereich und/oder Umlenkbereich streut. Die Halterung kann auch die Anzeigeeinrichtung stützen Die transluzente Halterung kann alle Bauteile der Visualisierungsvorrichtung stützen.

Die Halterung kann zumindest in dem Bereich, der dem Lichtsammelbereich benachbart ist aus Acrylnitril-Butadien-Styrol-Copolymer (ABS) ausgebildet sein. Die Halterung kann zumindest in dem Bereich, der dem Lichtsammelbereich benachbart ist, eingefärbt sein. Vorzugsweise wird eine weiße Einfärbung verwendet. Es versteht sich, dass die Halterung auch in dem Bereich, der dem Kollimationsbereich und/oder dem Umlenkbereich benachbart ist, aus Acrylnitril-Butadien-Styrol-Copolymer (ABS) ausgebildet sein kann und/oder eingefärbt, vorzugsweise in weißer Farbe, sein kann.

Bei einer Ausführungsform kann der Lichtsammelbereich als Lichtwellenleiter ausgebildet sein, der das Licht im Lichtsammelbereich an den Außenflächen des Lichtsammelbereichs zur optischen Achse ablenkt. Dadurch wird das Licht in Richtung Anzeigeeinrichtung geleitet.

Bei einer Ausführungsform kann die dritte Breite kleiner als die zweite Breite sein. Alternativ hierzu oder zusätzlich kann die zweite Breite gleich der ersten Breite sein.

Dadurch ist es möglich, den Lichtsammelbereich möglichst großflächig auszubilden. Im Kollimationsbereich verjüngt die Breite zur dritten Breite. Die dritte Breite kann der Breite entsprechen, die benötigt wird, um die Anzeigeeinrichtung ausreichend homogen zu beleuchten.

Eine Verjüngung in der Breite im Kollimationsbereich ist ohne Effekt auf die Lichtausbeute. Sie spart aber Bauraum. Theoretisch könnte die Breite des Kollimationsbereichs auch unverändert so groß sein, wie es die Breite der LCD-Anzeigeeinrichtung zur Ausleuchtung es erfordert.

Bei einer Ausführungsform kann die Visualisierungsvorrichtung eine Batterie und/oder einen Akkumulator aufweisen, der die Anzeigeeinrichtung und eine optionale Zusatzbeleuchtung mit Strom versorgt. Die Zusatzbeleuchtung kann durch Leuchtdioden (LED) ausgebildet sein. Die Zusatzbeleuchtung kann auf der dem Nutzer abgewandten Seite der Anzeigeeinrichtung angeordnet sein.

Bei einer Ausführungsform kann die optische Achse der Zusatzbeleuchtung kollinear zur Richtung der optischen Achse des Lichtsammelbereichs sein, wobei das von der Zusatzbeleuchtung abgegebene Licht an der Seite des Lichtsammelbereichs in den Lichtsammelbereich eintritt, die dem Kollimationsbereich abgewandt ist. Quer oder ungerichtet zur optischen Achse tritt Licht aus der Umgebung in den Lichtsammelbereich ein. Die Breite des Lichtsammelbereiches ist ein Vielfaches höher als die Dicke des Lichtsammelbereiches. Die Breite des Lichtsammelbereiches kann größer als die Breite und/oder Höhe des Bereichs der Anzeigeeinrichtung sein, der durch den Lichtsammelbereich und Kollimationsbereich beleuchtet werden soll. Das Licht der optionalen Zusatzbeleuchtung wird an der Schmalseite, die dem Kollimationsbereich abgewandt ist, in den Lichtsammelbereich geleitet. Dadurch kann das Licht der Zusatzbeleuchtung so durch den Kollimationsbereich kollimiert werden, wie das Umgebungslicht. Dadurch kann erreicht werden, dass der Nutzer das bedarfsweise Zuschalten der Zusatzbeleuchtung bei schlechten Lichtverhältnissen oder schnellen Lichtwechseln des Umgebungslichts, beispielsweise bei der Einfahrt in einen Tunnel, nicht störend wahrnimmt.

Die Visualisierungsvorrichtung kann eine Optik aufweisen, wobei die optische Achse der Anzeigeeinrichtung mit der optischen Achse der Optik kollinear ist. Die Optik kann eine Lupenoptik oder eine beliebige Abbildungsoptik sein. Die Optik kann ein virtuelles Bild in das Sichtfeld des Nutzers projizieren, so dass der Nutzer die Information ablesen kann, die auf der Anzeigeeinrichtung dargestellt ist.

Einer Ausführungsform kann die Visualisierungsvorrichtung eine Befestigungseinrichtung aufweisen, die dazu ausgebildet ist, die Visualisierungsvorrichtung an einem am Kopf eines Nutzers getragenen Gegenstandes so lösbar zu befestigen, dass sich ein von der Anzeigeeinrichtung und der Optik erzeugtes Bild im Sichtfeld des Nutzers befindet. Der am Kopf eines Nutzers getragene Gegenstand kann eine Kopfbedeckung,
ein Kopfschutz, ein Helm, ein Fahrradhelm, ein Wintersporthelm, ein Hut, eine Kappe, eine Mütze, ein Stirnband oder dergleichen sein. Es kann sich aber auch in einer besonderen Ausführungsform um eine Brille, Spezialbrille, Schutzbrille, Sportbrille oder Taucherbrille handeln. Dadurch können dem Nutzer unauffällig Informationen angezeigt werden, beispielsweise Puls, eine Richtungsinformation, eine Geschwindigkeit, eine Uhrzeit oder dergleichen.

Bei einer Ausführungsform können die Optik und die Befestigungseinrichtung an einer ersten Seite der Visualisierungsvorrichtung angeordnet sein. Der Lichtsammelbereich kann einer zweiten Seite der Visualisierungsvorrichtung angeordnet sein, der der ersten Seite entgegengesetzt ist. Die Optik kann an einem ersten Ende der Visualisierungsvorrichtung angeordnet sein. Der Lichtsammelbereich und/oder der Kollimationsbereich können sich an der zweiten Seite der Visualisierungsvorrichtung vom ersten Ende der Visualisierungsvorrichtung in Richtung zweitem Ende der Visualisierungsvorrichtung erstrecken. Bei dieser Ausführungsform befindet sich die Optik an der ersten Seite, die dem Nutzer zugewandt ist. Der Kollimationsbereich und/oder der Lichtsammelbereich erstrecken sich auf der dem Nutzer abgewandten zweiten Seite. Die Optik kann sich am ersten Ende, d. h. dem unteren Ende, der Visualisierungsvorrichtung befinden. Der Kollimationsbereich und/oder der Lichtsammelbereich erstrecken sich vom unteren Ende der Visualisierungsvorrichtung nach oben in Richtung zweitem Ende, d. h. dem oberen Ende. Dadurch ist es möglich, eine vergleichsweise hohe Menge an Licht zur Hintergrundbeleuchtung der Anzeigeeinrichtung zu sammeln, ohne dass das Sichtfeld des Nutzers mehr eingeschränkt wird, als unbedingt notwendig ist.

Die Erfindung betrifft auch eine Anordnung, die zuvor beschriebene Visualisierungsvorrichtung und einen am Kopf eines Nutzers getragenen Gegenstand aufweist. Die Befestigungseinrichtung der Visualisierungsvorrichtung befestigt die Visualisierungsvorichtung an dem am Kopf des Nutzers getragenen Gegenstandes so lösbar, dass sich die Optik vom Nutzer betrachtet unten befindet und sich der Lichtsammelbereich und/oder der Kollimationsbereich nach oben erstrecken. Die Visualisierungsvorrichtung kann so weitergebildet sein, wie zuvor beschrieben wurde.

Der am Kopf des Nutzers getragene Gegenstand kann eine Kopfbedeckung, ein Kopfschutz, ein Helm, ein Fahrradhelm, ein Wintersporthelm, ein Hut, eine Kappe, eine Mütze, ein Stirnband oder dergleichen sein. Es kann sich aber auch in einer besonderen Ausführungsform um eine Brille, Spezialbrille, Schutzbrille, Sportbrille oder Taucherbrille handeln.

Die Erfindung weist den Vorteil auf, dass ein vergleichsweiser hoher Anteil der Außenfläche der Visualisierungsvorrichtung zum Sammeln von Umgebungslicht verwendet werden kann und das Sichtfeld des Nutzers nur insoweit eingeschränkt wird, wie zum Darstellen der Information erforderlich ist.

### Kurze Beschreibung der Zeichnungen

Im Folgenden wird die Erfindung detaillierter unter Bezugnahme auf die beigefügten Zeichnungen beschrieben, die exemplarische und nicht beschränkende Ausführungsformen der Erfindung zeigen, wobei:
Figur 1 eine schematische Schnittansicht des optischen Systems der vorliegenden Erfindung ist;
Figur 2 eine schematische Draufsicht auf das optische System der vorliegenden Erfindung ist; und
Figur 3 eine Schnittansicht der erfindungsgemäßen Visualisierungsvorrichtung im Einsatz ist.

### Detaillierte Beschreibung der Zeichnungen

Es versteht sich, dass die Figuren nicht maßstabsgerecht sind und räumliche Beziehungen die Visualisierungsvorrichtung in ihrem bestimmungsgemäßen Einsatz beschreiben, aber nicht als beschränkend auszulegen sind.

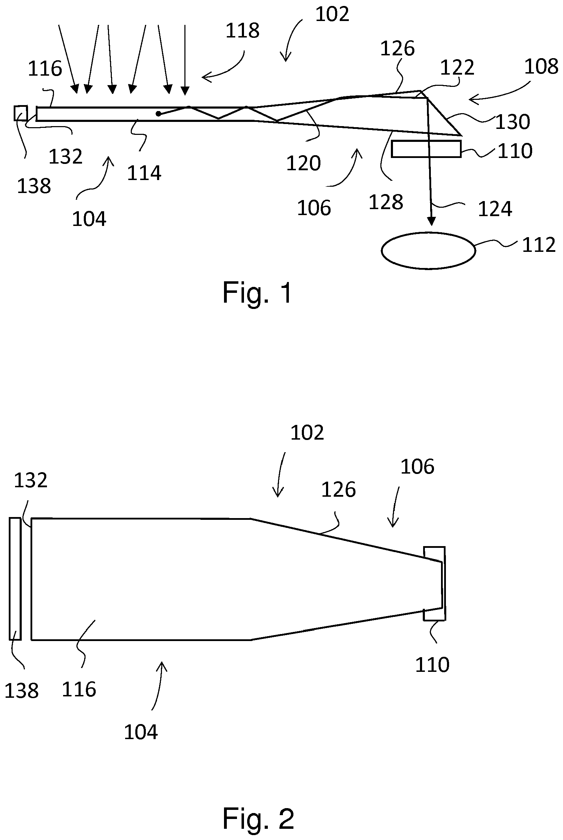

Figur 1 zeigt eine Schnittansicht des optischen Systems und Figur 2 zeigt eine Draufsicht auf das optische System der erfindungsgemäßen Visualisierungsvorrichtung 100. Ein Lichtwellenleiter 102 weist einen Lichtsammelbereich 104 auf, der dazu ausgebildet ist, quer oder ungerichtet zur optischen Achse auftreffende Lichtstrahlen im Lichtwellenleiter 102 zu absorbieren und als Lichtstrahlen 120 in Richtung eines Kollimationsbereichs 106 entlang der optischen Achse des Lichtwellenleiters 102 weiterzuleiten. Der Lichtwellenleiter 102 und insbesondere der Lichtsammelbereich 104 kann mit einem fluoreszierenden Material eingefärbt sein oder dieses aufweisen. Die Lichtstrahlen 118 erzeugen im Lichtwellenleiter 102 eine fluoreszierende Reaktion, die den Lichtstrahl 120 emittiert, der sich in Richtung Kollimationsbereich 106 ausbreitet. Der Lichtstrahl 120 wird an der Oberseite 116 und Unterseite 114 des Lichtsammelbereichs zur optischen Achse gebrochen, so dass der Lichtstrahl 120 in Richtung Kollimationsbereich 106 gelenkt wird.

Im Kollimationsbereich 106 wird der Lichtstrahl 120 im Sinne eines Kondensors parallelisiert, so dass sich im Kollimationsbereich 106 eine Mehrzahl paralleler Lichtstrahlen 122 ausbreiten. Im Kollimationsbereich 106 wird der Lichtstrahl 120 an der Oberseite 126 des Kollimationsbereichs 106 und der Unterseite 128 des Kollimationsbereichs 106 so abgelenkt, dass die Mehrzahl von parallelen ausgerichteten bzw. parallelisierten Strahlen 122 entstehen. Die Oberseite 126 des Kollimationsbereichs 106 ist abgewinkelt gegenüber der Oberseite 116 des Lichtsammelbereichs 104. Der Innenwinkel zwischen der Oberseite 126 des Kollimationsbereichs 106 und der Oberseite 116 des Lichtsammelbereichs 104 ist größer als 180°.

Bei der in Figur 1 dargestellten Ausführungsform ist auch die Unterseite 128 des Kollimationsbereichs 106 gegenüber der Unterseite 114 des Lichtsammelbereichs 104 abgewinkelt, so dass auch im unteren Bereich des Kollimationsbereichs 106 Licht kollimiert wird. Es ist aber nicht erforderlich, bei den Außenflächen des Kollimationsbereichs 106 gegenüber den Außenflächen des Lichtsammelbereichs 104 abzuwickeln.

Die Dicke des Lichtsammelbereichs 104 ist über seine Erstreckung in Richtung der optischen Achse konstant. Die Dicke des Kollimationsbereichs 106 ist nicht konstant und nimmt entlang der optischen Achse zu, je weiter der entsprechende Bereich des Kollimationsbereichs 106 vom Lichtsammelbereich 104 entfernt ist.

Am Kollimationsbereich 106 ist ein Umlenkbereich 108 angeordnet. Der Umlenkbereich 108 lenkt den Lichtstrahl 122 in den Lichtstrahl 124 ab, der aus dem Lichtwellenleiter 102 austritt und durch die Anzeigeeinrichtung 110 hindurchtritt. Der Lichtstrahl 124 durchläuft eine Abbildungsoptik 112, beispielsweise eine Lupenoptik, um einem Nutzer als virtuelles Bild dargestellt zu werden. Der Umlenkbereich 108 kann eine verspiegelte Fläche 130 aufweisen, die geneigt zur optischen Achse des Kollimationsbereichs 106 und/oder des Lichtsammelbereichs 104 ist. Auch das von der verspiegelten Fläche 130 gegenüberliegende Ende 132 des Lichtwellenleiters 102 kann verspiegelt sein.

Figur 2 zeigt eine Draufsicht auf den Lichtwellenleiter 102. Im Lichtsammelbereich 104 weist der Lichtwellenleiter 102 eine konstante Breite auf. Im Kollimationsbereich 106 verjüngt die Breite des Lichtwellenleiters 102 um die Intensität des auf die Anzeigeeinrichtung 110 abgegebenen Lichtes zu erhöhen. Es ist aber nicht notwendig, dass die gesamte Breite des Kollimationsbereichs 106 verjüngend ausgebildet ist. Bei einer anderen Ausführungsform kann der Kollimationsbereich 106 teilweise eine konstante Breite und teilweise eine verjüngende Breite aufweisen.

Eine Zusatzbeleuchtung 138, die Leuchtdioden aufweisen kann, beispielsweise Leuchtdioden, die Licht im gelben und/oder orangen Spektrum abgeben, gibt Licht kollinear zur optischen Achse (Längsachse) des Lichtsammelbereichs 104 in den Lichtsammelbereich 104 ab. Das von der Zusatzbeleuchtung 138 abgegebene Licht läuft durch den Lichtsammelbereich 104, den Kollimationsbereich 106, den Umlenkbereich 108, die Anzeigeeinrichtung 110 und die Abbildungsoptik 112 so, wie zuvor für das absorbierte Umgebungslicht beschrieben wurde. Die Zusatzbeleuchtung 138 wird von einem Akkumulator oder Batterie (nicht gezeigt) mit Strom versorgt und von einer Steuerungseinrichtung (nicht gezeigt) gesteuert. Die Steuerungseinrichtung aktiviert die Zusatzbeleuchtung 138, wenn die durch einen Helligkeitssensor ermittelte Intensität des Umgebungslichtes unter einen vorbestimmten Schwellenwert fällt. Der Nutzer nimmt die Aktivierung der Zusatzbeleuchtung nicht störend wahr, weil das Licht der Zusatzbeleuchtung 138 das gleiche optische System 104, 106, 108, 110, 112 durchläuft wie das Umgebungslicht.

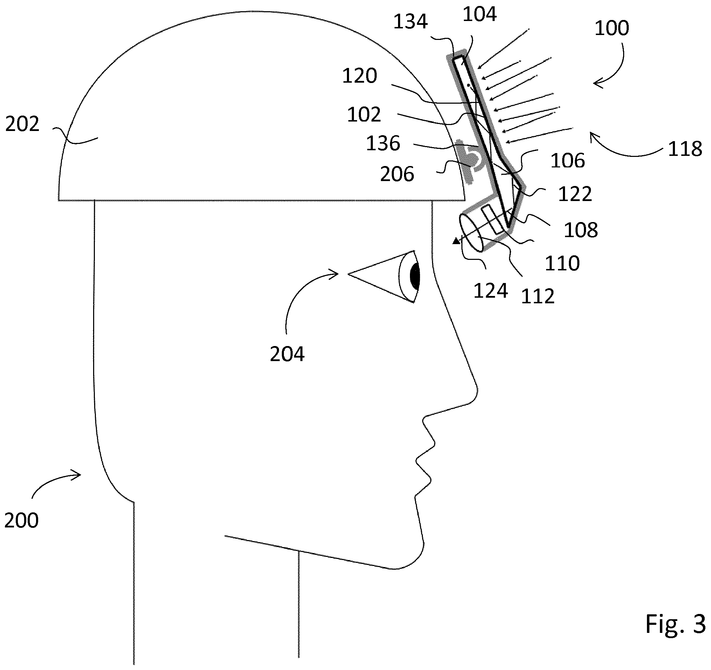

Es wird auf Figur 3 Bezug genommen, die eine Schnittansicht der erfindungsgemäßen Visualisierungsvorrichtung 100 zeigt, die ein Nutzer 200 trägt. Der Nutzer 200 trägt einen Helm 202 mit einer komplementären Befestigungseinrichtung 206, die mit einer Befestigungseinrichtung 136 der Visualisierungsvorrichtung 100 so zusammenwirkt, dass die Visualisierungsvorrichtung 100 lösbar am Helm 202 gehalten wird und der Winkel der Visualisierungsvorrichtung 100 gegenüber dem Auge 204 des Nutzers 200 einstellbar ist. Die Befestigungseinrichtung 136 und die komplementäre Befestigungseinrichtung 206 wirken auch so zusammen, dass die Visualisierungsvorrichtung 100 im Wesentlichen in der Breitenrichtung des Sichtfeldes (im Wesentlichen parallel zu einer gedachten Gerade zwischen den beiden Augen) verschiebbar ist.

Der Lichtsammelbereich 104, auf dem die Lichtstahlen 118 auftreffen, ist im Wesentlichen parallel zur Stirn des Nutzers 200 angeordnet. Der Umlenkbereich 108 lenkt den Lichtstrahl senkrecht zur optischen Achse des Lichtsammelbereichs 104 um, so dass der Lichtstrahl 124 durch die Anzeigeeinrichtung 110 und die Abbildungsoptik 112 hindurchtritt und ein virtuelles Bild erzeugt das vom Auge 204 des Nutzers 200 erkannt werden kann. Der Lichtwellenleiter 102 wird von einer Halterung 134 gehalten. An der der Lichteintrittsfläche abgewandten Seite des Lichtsammelbereichs 104 kann ein helles oder spiegelndes Element angeordnet sein, beispielsweise ein weißes Blatt Papier. Das helle oder spiegelnde Element kann sich bis in den Kollimationsbereich 106 erstrecken. Die Halterung 134 kann aus weißem Acrylnitril-Butadien-Styrol-Copolymer (ABS) gebildet sein. Dadurch wird zusätzlich Licht in den Lichtsammelbereich 104 des Lichtwellenleiters 102 eingespeist. Es versteht sich, dass die Halterung 134 den Lichtsammelbereich 104 in einem Bereich nicht bedeckt, in dem der Großteil der Lichtstrahlen 118 auftrifft. Der Großteil der Lichtstrahlen 118 trifft auf der Vorderseite bzw. Oberseite 116 des Lichtsammelbereichs 104 auf.

Die Erfindung hat den Vorteil, dass einerseits Strom einer Batterie gespart werden kann, um die Hintergrundbeleuchtung für die Anzeigeeinrichtung 110 zu erzeugen. Die Anzeigeeinrichtung 110 kann beispielsweise eine LCD-Anzeigeeinrichtung sein. Ferner wird die Intensität der Hintergrundbeleuchtung der Anzeigeeinrichtung 110 automatisch an die Umgebungshelligkeit angepasst.

Die komplementäre Befestigungseinrichtung 206 kann teilzylinderförmig ausgebildet sein und eine Nut in Längsrichtung aufweisen. Dadurch wird eine zusätzliche Elastizität erreicht, so dass die klammerartige Befestigungseinrichtung 136 der Visualisierungsvorrichtung 100 die Visualisierungsvorrichtung 100 stabiler am Helm 202 befestigt. Die Befestigungseinrichtung 136 und die komplementäre Befestigungseinrichtung 206 ermöglichen ein Verschieben der Visualisierungsvorrichtung 100 entlang des oberen Endes eines Sichtfeldes des Benutzers 200. Dadurch kann die Visualisierungsvorrichtung 100 an den Augenabstand des jeweiligen Nutzers 200 angepasst werden. Ferner ermöglicht die Befestigungseinrichtung 136 und die komplementäre Befestigungseinrichtung 206 ein Kippen der Visualisierungsvorrichtung 100, so dass die optische Achse der Anzeigeeinrichtung 110 und der Abbildungsoptik 112 auf das Auge 204 des Nutzers 200 angepasst werden kann.

## Patentansprüche

1. Visualisierungsvorrichtung (100), aufweisend
- einen Lichtsammelbereich (104), der aus der Umgebung der Visualisierungsvorrichtung (100) auftreffendes Licht sammelt;
- einen Kollimationsbereich (106), der mit dem Lichtsammelbereich (104) einstückig ausgebildet ist und der das vom Lichtsammelbereich (104) gesammelte Licht kollimiert und
- eine Anzeigeeinrichtung (110), wobei der Kollimationsbereich (106) das kollimierte Licht in Richtung Anzeigeeinrichtung (110) strahlt;
**dadurch gekennzeichnet, dass** der Lichtsammelbereich (104) an seiner dem Kollimationsbereich (106) zugewandten Seite eine erste Dicke und eine erste Breite und der Kollimationsbereich (106) an seiner dem Lichtsammelbereich (104) zugewandten Seite eine zweite Dicke und eine zweite Breite aufweist und an seinem dem Lichtsammelbereich (104) abgewandten Seite eine dritte Dicke und eine dritte Breite aufweist, wobei die dritte Dicke größer als die zweite Dicke ist.

2. Visualisierungsvorrichtung (100) nach Anspruch 1, **gekennzeichnet durch** zumindest eines von Folgendem:
- die erste Dicke ist gleich der zweiten Dicke;
- die Dicke des Kollimationsbereichs (106) nimmt linear von der zweiten Dicke zur dritten Dicke zu;
- die Dicke des Kollimationsbereichs (106) nimmt nicht-linear von der zweiten Dicke zur dritten Dicke zu;
- die Dicke des Lichtsammelbereichs (104) konstant ist;
- die Dicke des Lichtsammelbereichs (104) nimmt nicht-linear von der ersten Dicke über die zweite Dicke zur dritten Dicke zu;
- die Dicke des Lichtsammelbereichs (104) im Längsschnitt konstant ist und im Längsschnitt des Lichtsammelbereichs (104) und des Kollimationsbereichs (106) eine Kante des Lichtsammelbereichs (104) und des Kollimationsbereichs (106) kollinear ist und im Längsschnitt eine Kante (126, 128) des Kollimationsbereich (106) gegenüber dem Lichtsammelbereich (104) abgewinkelt ist;
- die Dicke des Lichtsammelbereichs (104) im Längsschnitt konstant ist und im Längsschnitt beide Kanten des Kollimationsbereich (106) gegenüber dem Lichtsammelbereich (104) abgewinkelt ist.

3. Visualisierungsvorrichtung (100) nach Anspruch 1 oder 2, **dadurch gekennzeichnet, dass** der Lichtsammelbereich (104) ein fluoreszierendes Material aufweist.

4. Visualisierungsvorrichtung (100) nach einem der Ansprüche 1 bis 3, wobei an dem Kollimationsbereich (106) ein Umlenkbereich (108) angeordnet ist, wobei der Umlenkbereich (108) an seiner dem Kollimationsbereich (106) abgewandten Seite eine Reflexionsfläche (130) aufweist, die gegenüber der Längsachse und/oder der optischen Achse des Lichtsammelbereichs (104) und/oder des Kollimationsbereichs (106) geneigt ist.

5. Visualisierungsvorrichtung (100) nach Anspruch 4, wobei die optische Achse der Anzeigeeinrichtung (110) gegenüber der optischen Achse des Lichtsammelbereichs (104) und/oder des Kollimationsbereichs (106) geneigt ist.

6. Visualisierungsvorrichtung (100) nach einem des Ansprüche 1 bis 5, ferner aufweisend eine Halterung (134), die zumindest den Lichtsammelbereich (104) stützt und zumindest in einem Bereich, der dem Lichtsammelbereich (104) benachbart ist, transluzent ausgebildet ist.

7. Visualisierungsvorrichtung (100) nach Anspruch 6, wobei die Halterung (134) zumindest in dem Bereich, der dem Lichtsammelbereich (104) benachbart ist, aus Acrylnitril-Butadien-Styrol-Copolymer (ABS) ausgebildet ist und/oder weiß eingefärbt ist.

8. Visualisierungsvorrichtung (100) nach einem der Ansprüche 1 bis 7, wobei der Lichtsammelbereich (104) als Lichtwellenleiter (102) ausgebildet sind, der das Licht im Lichtsammelbereich (104) an den Außenflächen (114, 116) des Lichtsammelbereichs (104) zur optischen Achse ablenkt.

9. Visualisierungsvorrichtung (100) nach einem der Ansprüche 1 bis 8, wobei
- die dritte Breite kleiner als die zweite Breite ist; und/oder
- die zweite Breite gleich der ersten Breite ist.

10. Visualisierungsvorrichtung (100) nach einem der Ansprüche 1 bis 9, ferner aufweisend eine Zusatzbeleuchtung (138), deren Lichtabgabe kollinear zur Richtung der optischen Achse des Lichtsammelbereichs (104) ist, wobei das von der Zusatzbeleuchtung (138) abgegebene Licht an der Seite des Lichtsammelbereichs (104) in den Lichtsammelbereich (104) eintritt, die dem Kollimationsbereich (106) abgewandt ist.

11. Visualisierungsvorrichtung (100) nach einem der Ansprüche 1 bis 10, ferner aufweisend eine Optik (112), wobei die optische Achse der Anzeigeeinrichtung (110) mit der optischen Achse der Optik (112) kollinear ist.

12. Visualisierungsvorrichtung (100) nach einem der Ansprüche 1 bis 11, ferner aufweisend eine Befestigungseinrichtung (136), die dazu ausgebildet ist, die Visualisierungsvorrichtung (100) an einem am Kopf eines Nutzers (200) getragenen Gegenstand (202) so lösbar zu befestigen, dass sich ein von der Anzeigeeinrichtung (110) und der Optik (112) erzeugtes Bild im Sichtfeld des Nutzers (200) befindet.

13. Visualisierungsvorrichtung (100) nach Anspruch 12, wobei sich die Optik (112) und die Befestigungseinrichtung (136) an einer ersten Seite der Visualisierungsvorrichtung (100, 130) angeordnet sind und der Lichtsammelbereich (104) an einer zweiten Seite, die der ersten Seite entgegengesetzt ist, der Visualisierungsvorrichtung (100, 132) angeordnet ist, wobei die Optik (112) an einem ersten Ende der Visualisierungsvorrichtung (100) angeordnet ist und sich der Lichtsammelbereich (104) und/oder der Kollimationsbereich (106) an der zweiten Seite der Visualisierungsvorrichtung (100) vom ersten Ende der Visualisierungsvorrichtung (100,130) in Richtung zweitem Ende der Visualisierungsvorrichtung (100, 132) erstrecken.

14. Anordnung, umfassend:
- die Visualisierungsvorrichtung (100) nach einem der Ansprüche 1 bis 13; und
- einen am Kopf eines Nutzers (200) getragenen Gegenstand (202);
wobei die Befestigungseinrichtung (136) der Visualisierungsvorrichtung (100) die Visualisierungsvorrichtung (100) an dem am Kopf des Nutzers (200) getragenen Gegenstand (202) so lösbar befestigt, dass sich die Optik (112) vom Nutzer (200) betrachtet am unteren Ende der Visualisierungsvorrichtung (100) befindet und sich der Lichtsammelbereich (104) und/oder der Kollimationsbereich (106) in Richtung oberes Ende der Visualisierungsvorrichtung (100) erstrecken.

15. Anordnung nach Anspruch 14, wobei der am Kopf des Nutzers (200) getragene Gegenstand (202) zumindest eines von Folgendem ist:
- eine Kopfbedeckung,
- ein Kopfschutz;
- ein Helm;
- ein Fahrradhelm;
- ein Wintersporthelm;
- ein Hut;
- eine Kappe;
- eine Mütze;
- ein Stirnband;
- eine Brille;
- eine Spezialbrille;
- eine Schutzbrille;
- eine Sportbrille;
- eine Taucherbrille.
